Europäisches Patentamt

European Patent Office

Office européen des brevets

(11) Publication number: **0 400 705**
**A1**

## (12) EUROPEAN PATENT APPLICATION

(21) Application number: **90201239.2**

(22) Date of filing: **16.05.90**

(51) Int. Cl.5: **C08K 3/00, C08J 3/20,**
**C08L 79/08, C09K 3/10**

The title of the invention has been amended (Guidelines for Examination in the EPO, A-III, 7.3).

(30) Priority: **19.05.89 NL 8901251**

(43) Date of publication of application:
**05.12.90 Bulletin 90/49**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Bleichrodt, Frederik**
**Leerlooierstraat 6**
**NL-6151 DC Stittard(NL)**
Inventor: **Essers, Franciscus Elisabeth Jacobus**
**Bilserbaan 31**
**NL-6217 JD Maastricht(NL)**

(54) **Filling material composition.**

(57) The invention relates to a composition which can be applied as a filling material consisting of filler particles and a resin containing bismaleimide compounds, which consists of a powder mixture of 60-80 vol. % filler particles and 2-27 vol. % of a resin containing a bismaleimide compound and 38-0 volume % voids, this resin having a softening point above 40°C.

Filling material according to the invention is particularly suitable for filling voids in objects which must locally be capable of withstanding high compressive strengths, such as honeycomb.

EP 0 400 705 A1

## COMPOSITION WHICH IS A FILLING MATERIAL

The invention relates to a composition which is a filling material, consisting of filler particles and a resin containing a bismaleimide compound.

Such compsition is known from United States Patent 4,135,019, which describes how filler particles are stirred into a liquid and the resulting slurry is poured into void(s) to be filled after which the liquid is evaporated. Subsequently, a solution containing bismaleimide resin is applied over it. Finally, the solvent is evaporated and the resin cured.

Because the filler particles are transferred into the void(s) first, they will obtain a close stapling and therefor the resulting filling material will not shrink during curing.

The drawbacks of the composition as described in US-4,135,01° are the time-consuming method of application and the use of solvents.

It is the object of the invention to provide a composition not having the above-mentioned drawbacks.

According to the invention this is achieved in that the composition consists of a powder mixture and in that this mixture contains 60-80 volume % filler particles and 2-27 volume % of a resin containing a bismaleimide compound, and 38-0 volume % voids, this resin having a softening point above 40° C.

This has as a further advantage that the filling material does not shrink during curing.

The composition is in powder form before filling. This has major advantages: it is simply possible to process the composition (transport, pouring into the void to be filled) and it is possible to achieve an optimum powder packing density by shaking or vibrating the material after pouring. This vibrating can be effected already by simply tapping the filled object.

With preference the composition has 1-17 volume % voids and with more preference the composition has 7-17 volume % voids.

In DE-A-2.611.524 an object is described that is made of filler particles and a polyimid resin, which resin can be present in an amount of 20 to 45 wt.%, and by preference is present in an amount of 30-35 wt.%. The filler particles have a flat form. Because of the form of the particles and the weight percentages of the resin, this material can not be used as a filling material in the way the particles and resin according to the invention do. The object in DE-A-2.611.524 is a packing in which the resin is applied as a mean of buffer between the particles, while in our invention the resin is applied as a glue which holds the particles together, while not keeping them apart. The composition in DE-A-2.611.524 is not in powder form, neither during the process nor in the product.

In JP-A-01-038451 a filler is described for bismaleimide resin which filler is applied in an amount of 10 wt.%. At such a low amount the resin-filler mixture will shrink during curing.

In EP-A-334.422 a process is described of forming particles containing cured bismaleimide, which can be applied as a paste like potting compound when mixed with a rein containing uncured bismaleimide compound. In this reference there is no mention about a powder mixture.

In EP-A-288.209 a conventional filling material is described containing bismaleimide compounds and a filler in an amount of up to 10 times as much filler (by weight) as resin. This filling material can be comminuted into particles before use by e.g. moulding. In this reference no indication is given about the possibility to obtain a filling material which has no shrinkage during curing of the resin, by choosing the specific volume ranges as in our invention. In the example of EP-A-288.209 the resin is present in an amount of 30 wt.%, which is outside the proper range according to the invention.

For a good packing effect it is advantageous that the filler particles be substantially spherical, or have a shape as close as possible to spherical.

The composition must meet a number of requirements: good storage capability; ease of processing (which in this case means free flowing properties); a high percentage of fillers; no release of volatile substances and little shrink upon curing; high compressive strength after curing. When filling material is used to fill up voids in honeycomb structures in, for instance, sandwich panels (for use in, for instance, aircraft and spacecraft), then there are a number of additional demands to be met by the material; the maximum temperature of use should at least be 120° C and preferably above 180° C; the specific mass should, if possible, be low; the fire behaviour must meet high demands.

In a first preferred embodiment use is made of a resin, which is a powder with an average diameter of the powder particles that is small compared with the average diameter of the filler particles; particularly satisfactory are resin powder particles with a diameter at least 5x smaller than the filler particle diameter. This ensures that, after pouring and vibrating, the filler particles will have the maximum packing density and the resin powder will (partly) fill up the voids between the filler particles.

The bulk volume of a mass of spheres is defined as the actual volume of the spheres plus the volume of the voids in between them. In an idealized case, with completely round spheres of one size, the actual volume of the spheres would be about 73% of the bulk volume, while the voids account for 27%. The 27% void volume can be filled up with resin powder particles, of which the actual volume will again be about 73% of their bulk volume. The total part of the actual volume now occupied by filler particles and resin powder particles together is 73% + 73% of 27% = about 93%. For the purpose of the invention it is advantageous when the actual occupied volume is as large as possible.

The 93% can be obtained if the filler particle diameter is much bigger than the resin powder particle diameter. At a diameter ratio of 5, however the actual volume occupied by filler particles and resin powder particles together is approximately 83%. The filler particles at this diameter ratio actually occupy about 73 volume % of the composition and the resin particles actually occupy about 10 volume %.

The favourable properties according to the invention can be obtained with different diameter ratio's and different volume parts ratio's, e.g. with 60-80 actual volume % filler particles and 2-27 actual volume % resin powder particles. Where in this text further is referred to volume %, the actual volume occupied is meant, relative to the bulk volume. By preference use is made of 70-75 vol. % filler particles and 10-27 vol. % resin powder particles. When filler particles with variable diameters are used the deviation may be somewhat bigger, for then a higher percentage of the bulk volume is occupied by filler particles. At a broad particle size distribution, the percentage of volume occupied can almost be 100. However, the percentage of adhesive resin that can be applied then is too low. (For the bimodal packing theory, see H.S. Katz, J.V. Milewski, "Handbook of fillers and reinforcements for plastics", Van Nostrand Reinhold Company, New York (1978), pp 66-79, pp. 301-331).

Since the bulk volume of the filling material at the conditions described above is determined by the (non-shrinking) bulk volume of the filler particles, the packing density of which is maximum, upon curing the bulk volume of the filling material will not or hardly shrink. Usually the shrink is smaller than 0.5 volume %. However, it is possible to obtain shrink figures below 0.1 vol. %.

In a second embodiment a resin is preferably applied as a thin coating on the filler particle. It is then to be preferred for the thickness of the coating to be small relative to the diameter of the filler particle. As a result, the filling material will not or hardly shrink due to shrinking of the resin layer upon curing. On particles with a diameter of 20 μm - 3 mm, for instance, the coating thickness can be about 1 μm. For a diameter of 100 μm this is about 3 vol. %. The coating can be applied by means of methods known in the art. For small particles this "encapsulating" preferably takes place in a fluid bed. For somewhat larger filler particles the rotating drum method can for instance be applied.

In the case of a resin coating, the resin volume percentage will generally be lower than in the embodiment which uses the resin powder. Good results are possible already at percentages of 3%. By preference the resin is applied in an amount of 2-9 vol. %.

To maintain a powder form at room temperature, the softening point must be above 40°c, and it preferably is between 40 and 60°C. The upper limit of the softening temperature is determined by the desired curing temperature. As a rule the curing temperature is below 250°C, preferably between 60 and 180, and more in particular between 80 and 150°C. At the curing temperature it is advantageous for the resin to have a rather low viscosity, which means that the softening point must at least be 20-40°C below the curing temperature.

Further, the viscosity of the resin of the powder particles and of the coating preferably is about 1000 - 3500 mPa.s at an elevated temperature (about 80°C).

Of the methods mentioned for mixing filler particles and resin preference is given to powder mixing. This method is relatively cheap, the powder is readily poured and vibrating is easy.

As filler particle use can be made of any material having a sufficiently high compressive strength and being available in powder form with the desired diameter and sphericity. Examples are microballoons of silica, ceramics or carbon, and solid beads of plastics, carbon, silica or ceramics. The solid beads of silica and ceramics will be too heavy for a number of applications and the microballoons have a too low compressive strength for applications involving heavy mechanical loads. Carbon microballoons further are relatively quite expensive.

By preference use is made of solid filler particles consisting of a cured bismaleimide-containing resin as described in EP-A-334.422. This application describes spherical filler particles having a diameter between 25 and 300 micrometer. These filler particles combine a high compressive strength with a low specific mass, in addition have a good compatibility with the resin, and possess good fire properties and a good temperature of use.

The resin containing bismaleimide compounds can be a resin as e.g. described in EP-A-206,383, EP-A-135,964, US-A-4,298,720 or US-A-4,244,427. By preference use is made of a resin as described in EP-A-135,964. This resin can be given the desired viscosity by adding components that copolymerize upon curing, so that no volatile substances are released.

As viscosity-reducing component for instance an ethylenically unsaturated compound can be added. This can be a bismaleimide oligomer or an ethylenically unsaturated monomer with fewer than 30 C-atoms. As ethylenically unsaturated monomer a monomaleimide compound can be chosen, or an aromatic or aliphatic mono- or diamine. These are described in, for instance, EP-A-135,964, DE-A-3,012,179, FR-A-2,031,538 and US-A-4,593,038. Vinylaromatic compounds, alkyl (meth)acrylate, hydroxyalkyl (meth)acrylate, divinyl and di- and triallyl compounds can also be applied.

Examples are styrene, $\beta$-methylstyrene, p-methylstyrene, chlorostyrene, hydroxy- or aminoalkylstyrene, hexyl (meth)-acrylate, ethyl (meth)acrylate, hydroxyethyl (meth)acrylate, divinylbenzene, diallyl cyanurate, triallyl isocyanurate, triallyl cyanurate, divinyl ester or maleic acid, trimethylol propylene, triacrylate, etc. Other suitable monomers are maleic anhydride and unsaturated epoxy compounds as described in, for instance, DD-A-235,881.

It is preferred to add styrene and/or hydroxyethyl (meth)acrylate (HEMA) to reduce the viscosity. Both monomers can copolymerize with the bismaleimide. Instead of, or together with, HEMA, use can also be made of a phosphate ester of HEMA (2-(meth)acryloxyethyl phosphate). This has the advantage that the flammability is increased less by adding further viscosity-reducing agents.

Other reactive diluting agents are triallyl cyanurate and trialkyl isocyanurate. Other substances that can be added are: epoxy compounds, initiators such as peroxide (e.g. tertiary butylperbenzoate or cumylhydroperoxide), accelerators, inhibitors, flexibilizers (e.g. acrylonitrile-butadiene rubbers) and surfactants.

After filling of the void and optional vibrating until the maximum packing density is achieved, the object comprising the void to be filled is in its entirety placed in an autoclave and heated to a temperature at which resin curing takes place.

A composition according to the invention is extremely suitable for local filling of parts of honeycomb sandwich panels, which must locally be capable of withstanding a higher compressive strength, for instance for screwing down structural parts to or on a floor or wall built up of honeycomb sandwich panels. In a simple manner the powder can then be poured into the void and the packing density increased by tapping. After this the panel is placed in an autoclave for resin curing. This is advantageous especially if the facings of the sandwich panel also consist of, for instance, fibres or mats impregnated with resin that contains bismaleimide compounds, which (also) still need to be cured. Filling with filler powder can, if desired, be performed by a robot.

The composition according to the invention preferably has a density between 0.55 and 1.3 g/cm$^3$. More preferably, the density is between 0.6 and 0.75 g/cm$^3$.

The invention will now be elucidated on the basis of the following examples, without being restricted thereto.

The viscosity of resin and resin mixtures is measured in oscillation using a Haake cone-and-plate viscometer.

The compressive strength is determined by cutting a cube of standard dimensions from a block of filling material, which cube is compression loaded in a tensile tester between two plan-parallel plates.

The density is determined by measuring the mass and volume of a cube and dividing the former by the latter.

## Examples I-V

Resin powder granules for the adhesive were prepared in the following way:
An amount of resin containing bismaleimide compound according to EP-A-135,964 was cooled to -18°C and then ground in a (coffee) grinder down to a particle size below 50 $\mu$m.

As filler particles use was made of solid, cured resin particles containing bismaleimide compound as described in FP-334.422 with a particle size of about 250 $\mu$m.

In a 100 ml measuring cylinder 100 ml portions (bulk volume) of filler particles were measured off, which were tapped to obtain the maximum packing density. In a second measuring cylinder an amount of resin powder particles for the adhesive, also with the maximum packing density, was measured off, the amount being such as to yield the bulk volume ratios shown in Table 1. The contents of both measuring cylinders were mixed in a closed jar on a multi-roll drum tumbler for about 2 hours.

The homogeneous mixture has a pot life of at least 12 months at -18°C. A portion of this mixture was poured into a test tube, again densified to the maximum packing density by tapping, and cured at 125°C for 2 hours in an air-circulating oven. The difference between initial height and final height is a measure of the shrinkage upon curing. The results are presented in Table I. Using the abovedescribed method the

4

compressive strength of the material of Example IV was found to be 15.9 N/mm2, and the specific weight 0.7 g/cm³.

TABLE 1

| Results of the examples | | |
|---|---|---|
| Example | Volume ratio (bulk volumes) | % shrinkage upon curing |
| | filler particles : adhesive particles | |
| I | 60 : 40 | 8.6 |
| II | 65 : 35 | 4.8 |
| III | 70 : 30 | 1.7 |
| IV | 75 : 25 | 0 |
| V | 80 : 20 | 0 |
| (here the ratio of the bulk volumes is equal to the ratio of the actual volumes.) | | |

According to the bimodal packing theory, in an ideal case of a mixture of particles of two seizes the shrinkage is zero above 73 actual vol. % filler particles. As can be seen from Table I, in Example V zero shrinkage was realized at 75 vol. % filler particles.

Example VI

Filler particles as in Examples I through V, with a diameter of about 100 μm were coated in a fluid bed with an approximately 1μm thick adhesive layer on the basis of a resin containing bismaleimide compound as described in EP-A-135,964. The adhesive coating accounts for 3 weight per cent of the total amount of filling material. The particles are poured into a test tube, densified by tapping, and cured at 125° C during 2 hours in a air-circulating oven. The shrinkage was 0% and the compressive strength about 30 N/mm². An added advantage is reduced dusting of the filling material during processing.

**Claims**

1. Composition which can be applied as a filling material, consisting of filler particles and a resin containing bismaleimide compounds, characterized in that the composition consists of a powder mixture of 60-80 vol. % filler particles and 2-27 vol.% of a resin containing a bismaleimide compound and 38-0 volume% voids, this resin having a softening point above 40° C.

2. Composition according to claim 1, characterized in that the composition comprises resin powder particles, mixed with the filler particles.

3. Composition according to claim 2, characterized in that the composition comprises resin powder particles having a diameter that is at least 5x as small as the filler particle diameter.

4. Composition according to any one of claims 1-3, characterized in that composition comprises 70-75 volume % filler particles and 10-27 volume % resin powder.

5. Composition according to claim 1, characterized in that the resin is applied to the filler particles as a thin layer.

6. Composition according to claim 5, characterized in that it comprises 2-9 vol. % resin.

7. Composition according to any one of claims 1-6, characterized in that the filler particles consist of cured resin containing bismaleimide compounds.

8. Composition according to any one of claims 1-7, characterized in that the density of the filling material is between 0.55 and 1.3 g/cm³.

9. Composition according to any one of claims 1-8, characterized in that the density of the filling material is between 0.6 and 0.75 g/cm³.

10. Process for the filling of voids with a composition according to any one of claims 1-9, which composition is cured after filling, characterized in that the composition is shaken or vibrated after filling and before curing.

11. Product filled with a composition as described in any one of claims 1-9 or filled using a process as described in claim 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X, D | EP-A-334422 (STAMICARBON BV)<br>* claim 12 *<br>--- | 1-9 | C08K3/00<br>C08J3/20<br>C08L79/08<br>C09K3/10 |
| A,D | DE-A-2611524 (FEODOR BURGMANN DICHTUNGSWERK)<br>* page 1, lines 5 - 9 *<br>* page 13, lines 11 - 18 *<br>* claim 8 *<br>--- | 1-2 | |
| A,D | EP-A-288209 (MITSUI PETROCHEMICAL INDUSTRIES LTD)<br>* page 5, lines 46 - 47 *<br>--- | 1-2 | |
| A,D | CHEMICAL PATENTS INDEX 1989, NR 12, VOL. A 17.5.1989; ABSTRACT 89-088860<br>& JP-A-01-038451 (DENKI KK)<br>* The total abstract *<br>----- | 1-2 | |

**TECHNICAL FIELDS SEARCHED (Int. Cl.5 )**

C08K
C08J
C08L
C09K
C08F

The present search report has been drawn up for all claims

| Place of search | Date of completion of the search | Examiner |
|---|---|---|
| THE HAGUE | 27 AUGUST 1990 | SCHUELER D.H.H |

EPO FORM 1503 03.82 (P0401)